# EUROPÄISCHE PATENTSCHRIFT

(11) **EP 2 387 495 B1**
(45) Veröffentlichungstag und Bekanntmachung des Hinweises auf die Patenterteilung: **09.10.2013**
(21) Anmeldenummer: 09802150.4
(22) Anmeldetag: 30.12.2009
(51) Int. Cl.: B29C 65/08, B29C 65/74, B65B 51/22, B65B 51/30

(54) **VORRICHTUNG ZUM SCHWEIßEN UND TRENNEN VON PACKSTOFFEN**
DEVICE FOR WELDING AND SEPARATING PACKAGING MATERIALS
DISPOSITIF DE SOUDAGE ET DE SÉPARATION DE MATÉRIAUX D'EMBALLAGE

(30) Priorität: 15.01.2009 DE 102009000240
(43) Veröffentlichungstag der Anmeldung: 23.11.2011
(73) Patentinhaber: Robert Bosch GmbH, 70442 Stuttgart (DE)
(72) Erfinder: LOECHT, Heinrich, 71522 Backnang (DE); WIEDUWILT, Ulrich, 73529 Schwaebisch Gmuend (DE)
(86) Internationale Anmeldenummer: PCT/EP2009/068029
(87) Internationale Veröffentlichungsnummer: WO 2010/081639

(56) Entgegenhaltungen:
- WO-A1-2005/102844
- WO-A1-2007/012917
- WO-A1-2008/102250
- US-A- 4 254 601
- US-A- 4 517 790
- US-A- 4 949 846
- US-A1- 2006 086 068

## Beschreibung

### Stand der Technik

Die vorliegende Erfindung betrifft eine Vorrichtung zum Schweißen und Trennen von Packstoffen, welche insbesondere in Verbindung mit Schlauchbeutelmaschinen verwendet wird.

Süßigkeiten oder andere Artikel werden häufig mittels Schlauchbeutelmaschinen verpackt. Hierbei wird üblicherweise aus einer Folie über einer Formschulter ein länglich geschlossener Schlauch hergestellt, und dann mit einem Quersiegelvorgang das offene Ende des Schlauchs verschlossen, anschließend befüllt und dann über dem Füllbereich nochmals mittels einer Quersiegeleinrichtung versiegelt. Gleichzeitig wird mit der Herstellung des zweiten Verschlussbereichs (Fußende) eines Beutels auch eine erste Seite (Kopfende) eines nachfolgenden Beutels gesiegelt. Anschließend sind üblicherweise Schneidevorrichtungen vorgesehen, um die noch zusammenhängenden Beutel zu trennen. Hierbei ist es bekannt, den Schweißvorgang beispielsweise mittels Ultraschall auszuführen, wobei die Ultraschall-Schweißvorrichtung eine Sonotrode und einen Amboss umfasst und der Packstoff zwischen Sonotrode und Amboss durch Berühren der beiden Teile verschweißt wird. Hierbei ist aus der DE 600 17 041 T2 ferner bekannt, eine linear bewegbare Schneidvorrichtung vorzusehen, welche in einen Amboss integriert ist. Zur Ausführung des Schneidvorgangs muss jedoch die Packstoffbahn angehalten werden, um den Schneidvorgang ausführen zu können.

Aus der US 2006/086068 A1 ist bereits eine Ultraschallsiegelvorrichtung bekannt, über die mittels rotierender Siegelbacken eine Quersiegelung eines Schlauchbeutels erzielbar ist. Hierzu umfasst die Siegelbacke auch ein Trennmesser.

Aus der WO 2005/102844 A1 ist bereits eine rotierende Siegelstation bekannt, die auf Ultraschall basiert. Die Siegelstation übernimmt die Quersiegelung und Trennung des Packstoffs.

Aus der WO 2007/012917 A1 ist bereits eine gattungsgemäße Vorrichtung bekannt, bei der ebenfalls mittels einer auf Ultraschall basierenden Quersiegelstation der Packstoff gesiegelt und getrennt wird. Eine entsprechende gattungsgemäße Vorrichtung zeigt ebenfalls die WO 2008/102250 A1.

Aus der US 4,517,790 schließlich ist eine auf Ultraschall basierende Quersiegelstation bekannt, welche sich insbesondere durch Heben und Senken der Sonotrode und entsprechendes Schneiden auszeichnet.

### Offenbarung der Erfindung

Die erfindungsgemäße Vorrichtung mit den Merkmalen des Anspruchs 1 weist demgegenüber den Vorteil auf, dass in einem Arbeitsschritt ein Schweißen und Trennen von Packstoffen, insbesondere von Schlauchbeuteln, ermöglicht wird. Hierbei ist es erfindungsgemäß vorgesehen, dass eine Ultraschall-Schweißvorrichtung, welche eine Sonotrode mit wenigstens einem Sonotroden-Segment, und einen Amboss mit wenigstens einem Amboss-Segment aufweist, derart ausgebildet ist, dass die Sonotrode und der Amboss jeweils um eine Rotationsachse drehbar sind. Hierbei kann sichergestellt werden, dass der Packstoff kontinuierlich durch die Ultraschall-Schweißvorrichtung hindurchgeführt werden kann, ohne dass ein Anhalten notwendig ist. Hierdurch kann ein schnelleres Siegeln und Trennen ermöglicht werden. Ferner wird erfindungsgemäß auch erreicht, dass die in die Ultraschall-Schweißvorrichtung integrierte Schneideinrichtung derart angeordnet ist, dass sie keinen Kontakt mit der Sonotrode bzw. dem Amboss aufweist, so dass die Klinge der Schneideinrichtung nicht durch Kontaktierung einem zu starken Verschleiß ausgesetzt ist. Weiterhin kann dabei insbesondere auf eine Schwingungsentkopplung verzichtet werden, so dass die erfindungsgemäße Vorrichtung sehr kostengünstig ist. Erfindungsgemäß ist eine Schneidkante der Schneideinrichtung in die Sonotrode integriert. Hierdurch wird ein besonders kompakter Aufbau erreicht.

Die Unteransprüche zeigen bevorzugte Weiterbildungen der Erfindung.

Vorzugsweise umfasst die Sonotrode eine Vielzahl von radial nach außen vorstehenden Sonotroden-Segmenten sowie der Amboss eine Vielzahl von radial nach außen vorstehenden Amboss-Segmenten. Somit sind die Sonotrode und der Amboss sternförmig ausgebildet und es kann ein rotatives Siegelsystem vorgesehen werden, welches pro Zeiteinheit eine hohe Siegelleistung sicherstellt.

Weiter bevorzugt ist ein an der Schneidvorrichtung vorgesehenes Spannelement eine vom Amboss-Segment vorstehende Leiste. Die vorstehende Leiste stellt sicher, dass der Packstoff eine schikanenartige Umlenkung erfährt und über das Spannelement gespannt ist. Durch die rotative Bewegung des Amboss kommt das Spannelement dabei langsam mit dem Packstoff in Kontakt und spannt diesen maximal, wenn die vorstehende Leiste senkrecht zur Förderrichtung des Packstoffs angeordnet ist.

Weiter bevorzugt umfasst das Spannelement eine Verstelleinrichtung, so dass es in Radialrichtung verstellbar ist. Hierdurch kann die Position einer Schnittkante zwischen zwei Packungen einfach verändert werden.

Weiter bevorzugt ist am Spannelement wenigstens eine vorstehende Zusatzschneide angeordnet, um einen Zusatzschnitt in den Packstoff einzubringen. Dieser Zusatzschnitt ist beispielsweise dann in der fertigen Verpackung eine Aufreißhilfe, welche zum leichteren Öffnen der Packung vorgesehen werden kann. Durch die Zusatzschneide kann somit in einem Schritt mit der Trennung der Verpackung von der nachfolgenden Verpackung aus der Packungsreihe gleichzeitig eine Aufreißhilfe eingebracht werden. Vorzugsweise ist die Zusatzschneide senkrecht zur Leistenrichtung vorgesehen. Weiter bevorzugt ist am Spannelement eine Vielzahl von Zusatzschneiden derart angeordnet, dass insbesondere ein zick-zack-förmiges Schneidenmuster oder ein beliebiges anderes Muster erzeugt wird. Hierdurch kann eine Verpackung mit entsprechend ausgebildeten Zick-Zack-Kanten hergestellt werden.

Gemäß einer weiteren bevorzugten Ausgestaltung der Erfindung ist am Sonotroden-Segment eine Ausnehmung ausgebildet, wobei an der Ausnehmung die Schneidkante angeordnet ist. Die Schneidkante ist dabei an einem Übergang zwischen der Ausnehmung und einer Stirnseite des Sonotroden-Segments vorgesehen. Die Schneidkante kann beispielsweise durch Fräsen der Ausnehmung in die Stirnseite des Sonotroden-Segments automatisch ausgebildet werden.

Weiter bevorzugt ist am Sonotroden-Segment und am Amboss-Segment jeweils ein erster und ein zweiter Siegelbereich ausgebildet und die Schneideinrichtung ist zwischen dem ersten und zweiten Siegelbereich angeordnet. Hierdurch wird erreicht, dass durch die rotatorische Anordnung von Sonotrode und Amboss zuerst ein Siegelschritt, dann der Schneidschritt und dann wieder ein Siegelschritt ausgeführt wird.

Es sei angemerkt, dass die erfindungsgemäße Vorrichtung horizontal oder vertikal angeordnet sein kann, d.h., dass eine Förderrichtung horizontal oder vertikal ist. Ferner kann die Vorrichtung kontinuierlich oder diskontinuierlich arbeiten.

Ferner betrifft die Erfindung eine Schlauchbeutelmaschine, umfassend eine erfindungsgemäße Vorrichtung zum Schweißen und Trennen von Packstoffen. Besonders bevorzugt sind dabei die Sonotrode und der Amboss vertikal angeordnet und die Förderrichtung der erzeugten Schlauchbeutel ist ebenfalls vertikal. Hierdurch ist es möglich, dass durch den Kontakt zwischen der Sonotrode und dem Amboss während der Siegelschritte der Packstoff mitgefördert wird.

Es sei angemerkt, dass bei der Sonotrode und dem Amboss die Anzahl der Sonotroden-Segmente bzw. Anzahl der Amboss-Segmente frei wählbar ist und gegebenenfalls von der Produktgröße bzw. einem Durchmesser der rotierten Sonotrode bzw. des rotierenden Ambosses abhängt. Bevorzugt sind jeweils zwei bis acht Segmente, vorzugsweise jeweils sechs Segmente, vorgesehen.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Seitenansicht einer Vorrichtung gemäß einem Ausführungsbeispiel der Erfindung in einer ersten Stellung,
- Figur 2: eine schematische Ansicht der Vorrichtung in einer zweiten Stellung,
- Figur 3: eine schematische Ansicht der Vorrichtung in einer dritten Stellung,
- Figur 4: eine schematische Ansicht der Vorrichtung in einer vierten Stellung,
- Figur 5: eine vergrößerte Seitenansicht eines Sonotroden-Segments,
- Figur 6: eine schematische Ansicht der Vorrichtung in Förderrichtung,
- Figur 7: eine perspektivische Ansicht eines Spannelements der Vorrichtung, und
- Figur 8: eine vergrößerte Teilansicht des in Figur 7 gezeigten Spannelements.

### Bevorzugte Ausführungsform der Erfindung

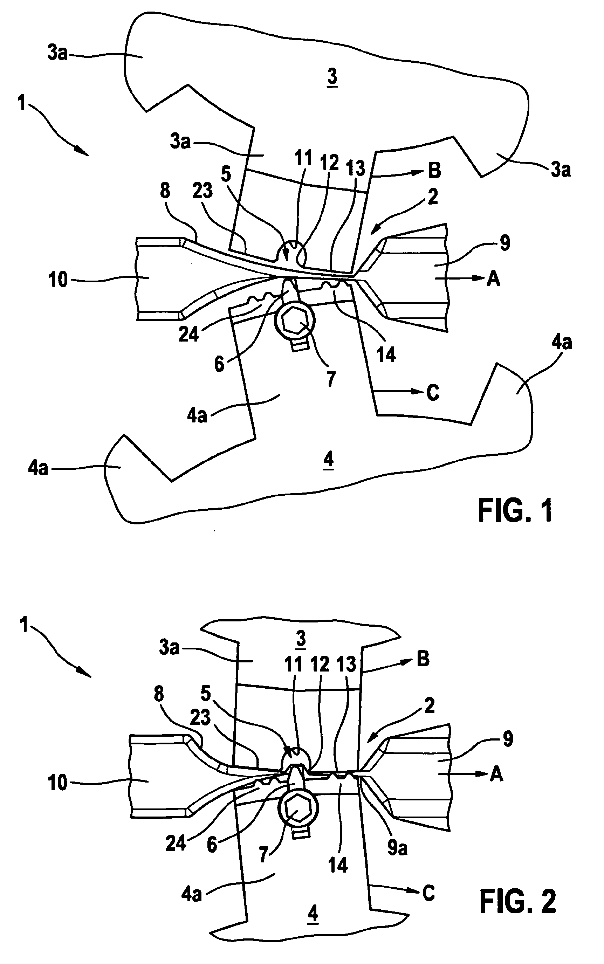

Nachfolgend wird unter Bezugnahme auf die Figuren 1 bis 8 eine horizontal angeordnete Vorrichtung 1 zum Schweißen und Trennen von Packstoffen gemäß einem bevorzugten Ausführungsbeispiel der Erfindung im Detail beschrieben.

Wie aus den Figuren 1 bis 4 ersichtlich ist, umfasst die Vorrichtung 1 eine Ultraschall-Schweißvorrichtung 2 mit einer Sonotrode 3 und einem Amboss 4. Die Sonotrode 3 und der Amboss 4 sind jeweils sternförmig aufgebaut, wobei die Sonotrode 3 eine Vielzahl von Sonotroden-Segmenten 3a umfasst, welche sternförmig an der Sonotrode 3 angeordnet sind. Genauer sind Sonotroden-Segmente 3a radial nach außen vorstehend an der Sonotrode 3 gebildet. In ähnlicher Weise ist der Amboss 4 mit einer Vielzahl von Amboss-Segmenten 4a ausgebildet, welche ebenfalls sternförmig, nach außen vorstehend an dem Amboss 4 angeordnet sind. Die Sonotrode 3 ist um eine erste Rotationsachse (nicht dargestellt) in Richtung des Pfeils B drehbar und der Amboss 4 ist um eine zweite Rotationsachse (ebenfalls nicht dargestellt) in Richtung des Pfeils C rotierbar. Die Sonotrode 3 und der Amboss 4 sind in diesem Ausführungsbeispiel vertikal angeordnet und zwischen der Sonotrode 3 und dem Amboss 4 wird der Packstoff 8 in Förderrichtung A hindurchgeführt.

In diesem Ausführungsbeispiel ist die Vorrichtung 1 Teil einer Schlauchbeutelmaschine, mittels welcher kontinuierlich oder diskontinuierlich Beutel geformt und befüllt werden. Das Bezugszeichen 9 bezeichnet dabei einen bereits mit einem Artikel, z.B. Süßigkeiten, gefüllten Beutel und das Bezugszeichen 10 bezeichnet einen bereits geformten, jedoch noch nicht befüllten Beutel.

Die Sonotrode 3 weist ferner einen ersten Siegelbereich 13 und einen zweiten Siegelbereich 23 an ihrer Stirnseite auf. In gleicher Weise weist der Amboss 4 einen ersten Siegelbereich 14 und einen zweiten Siegelbereich 24 ebenfalls an seiner Stirnseite auf. Wie aus Figur 1 ersichtlich ist, liegen sich dabei die ersten Siegelbereiche 13, 14 und die zweiten Siegelbereiche 23, 24 in Abhängigkeit von einer Rotationsposition der Sonotrode 3 bzw. des Amboss 4 gegenüber. Die ersten Siegelbereiche 13, 14 dienen dabei zum Siegeln einer Endnaht an den bereits gefüllten Beutel 9 und die zweiten Siegelbereiche 23, 24 dienen zum Siegeln einer vorderen Naht (Kopfnaht) eines noch nicht gefüllten Beutels 10.

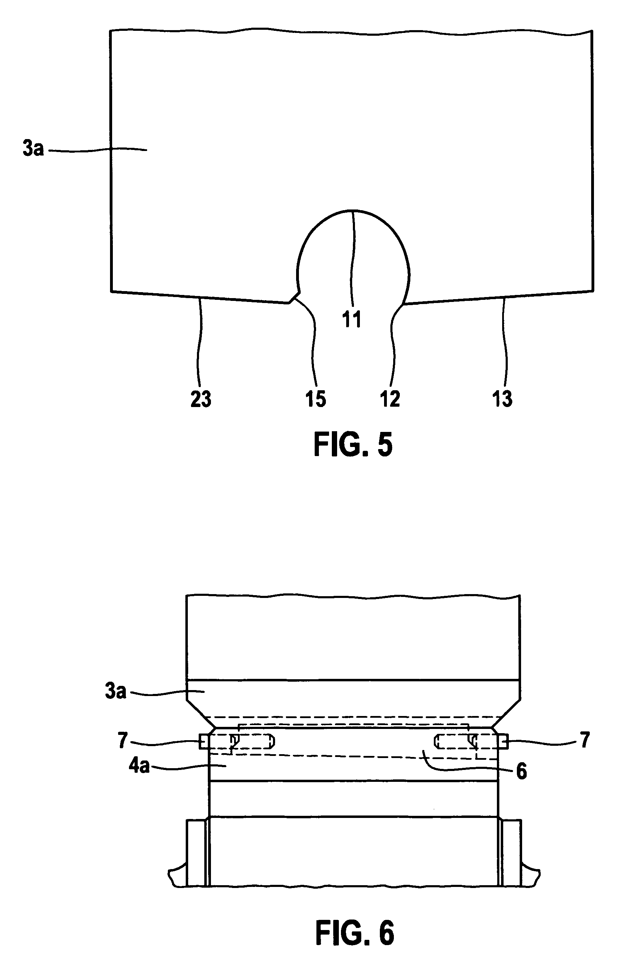

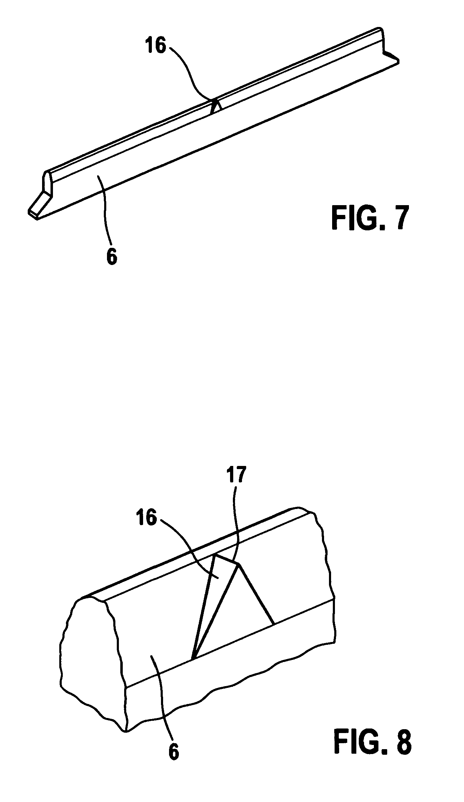

Die Vorrichtung 1 umfasst ferner eine Schneideinrichtung 5. In diesem Ausführungsbeispiel basiert das Schnittprinzip der erfindungsgemäßen Schneideinrichtung 5 auf den Grundlagen eines Quetschschnittes, d.h., einem Verdrängen des Packstoffs 8 entlang einer Kontur durch Krafteinwirkung. Hierzu umfasst die Schneideinrichtung 5 ein Spannelement 6, welches im Detail in den Figuren 7 und 8 dargestellt ist, sowie eine Schneidkante 12. Das Spannelement 6 ist eine am Amboss 4 fixierte Leiste, welche vom Amboss 4 radial nach außen vorsteht. Das Spannelement 6 ist dabei mittels einer Verstelleinrichtung 7 in Form zweier Schrauben (vgl. Figur 6) versehen. Die Schneidkante 12 ist an dem Sonotroden-Segment 3a an einem Übergang zwischen einer Ausnehmung 11, welche in der Stirnseite des Sonotroden-Segments 3a gebildet ist, und der Stirnseite selbst gebildet. Wie aus Figur 5 ersichtlich ist, ist an der gegenüberliegenden Seite der Schneidkante 12 ein abgefaster Bereich 15 ausgebildet, über welchen die Ausnehmung 11 in den zweiten Siegelbereich 23 des Sonotroden-Segments 3a übergeht. Die Schneidkante 12 bildet den Übergang zwischen der Ausnehmung 11 und dem ersten Siegelbereich 13. Somit ist die Schneidkante 12 in Rotationsrichtung B der Sonotrode 3 zwischen dem ersten Siegelbereich 13 und dem zweiten Siegelbereich 23 angeordnet.

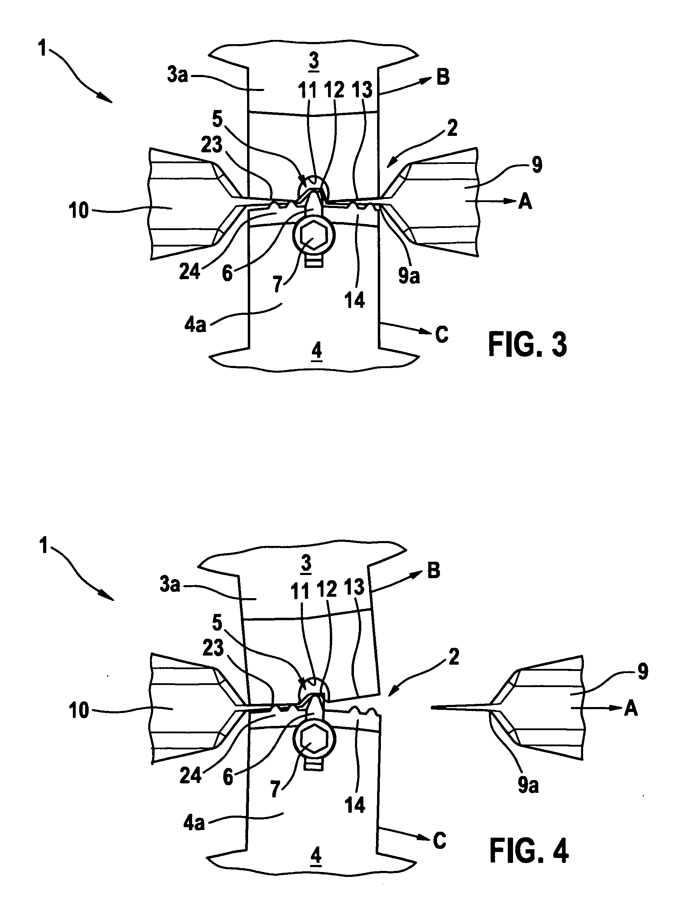

Wie aus den Figuren 2 und 3 ersichtlich ist, ist die Ausnehmung 11 im Sonotroden-Segment 3a dabei derart ausgebildet, dass während des Siegel- und Schneidvorgangs das Spannelement 6 etwas in die Ausnehmung 11 hineinragt, ohne jedoch das Sonotroden-Segment 3a zu berühren. Das Spannelement 6 sorgt lediglich für ein Umlenken des Packstoffs 8 zwischen dem voreilenden Beutel 9 und dem nacheilenden Beutel 10, so dass der Packstoff in diesem Bereich gespannt wird und dann mittels der Schneidkante 12 abgetrennt werden kann.

Wie weiter aus den Figuren 7 und 8 ersichtlich ist, umfasst die Schneideinrichtung 5 ferner eine Zusatzschneide 16, welche am Spannelement 6 vorgesehen ist. Die Zusatzschneide 16 ist dabei in diesem Ausführungsbeispiel senkrecht zur Längsrichtung des Spannelements 6 ausgerichtet und weist eine scharfkantige Schneidkante 17 in Rotationsrichtung C des Amboss 4 auf. Die Zusatzschneide 16 dient zur Bildung eines Aufreißbereichs für den gefüllten Beutel 9, was später im Detail beschrieben wird.

Die Funktion der erfindungsgemäßen Vorrichtung 1 ist dabei wie folgt. Wie aus Figur 1 ersichtlich ist, läuft ein Packschlauch, welcher schon durch einen nicht gezeigten Längssiegelvorgang hergestellt wurde und einen gefüllten Beutel 9 umfasst, durch die Schneid- und Siegelzone der Vorrichtung 1. Hierbei ist die Rotationsrichtung B, C von Sonotrode und Amboss gleich der Förderrichtung A des Packschlauchs. In der in Figur 2 gezeigten Position beginnt der erste Quersiegelvorgang zur Erzeugung einer Fußnaht 9a am voreilenden Beutel 9. Hierbei kommen der erste Siegelbereich 13 des Sonotroden-Segments 3a und der zweite Siegelbereich 23 des Amboss-Segments 4a miteinander in Kontakt und siegeln den Packstoff in diesem Bereich quer zur Förderrichtung A. Wie weiter aus Figur 2 ersichtlich ist, beginnt ferner das Spannelement 6 der Schneideinrichtung 5 damit, den Packstoff 8, welcher sich zwischen dem voreilenden Beutel 9 und dem nacheilenden Beutel 10 befindet, zu spannen. In Figur 3 ist der Spannvorgang maximal und es beginnt die Schneidphase. Hierbei ist, wie aus Figur 3 ersichtlich ist, die Schneidkante 12 am Sonotroden-Segment 3 in Kontakt mit dem gespannten Packstoff, so dass hierdurch große mechanische Kräfte auf den Packstoff ausgeübt werden. Ferner ist an dieser Stelle auch die mechanische Belastung infolge der Ultraschall-Schwingung durch den Ultraschall-Schweißvorgang am größten. Dies führt insbesondere zu einem Erweichen des Materials infolge der Einwirkung des Ultraschalls, so dass der Packstoff entlang des Spannelements 6 und der Schneidkante 12 verdrängt und getrennt wird. Ferner wird, wie in Figur 3 ersichtlich ist, der Packstoff 8 auch sehr stark über die Zusatzschneide 16 gespannt, so dass auch die Aufreißhilfe in die Fußnaht 9a eingebracht wird. Hierbei sei angemerkt, dass aufgrund der Vorspannwirkung über die Zusatzschneide 16 üblicherweise zuerst die Aufreißhilfe gebildet wird und dann erst eine Trennung des Packstoffs im Bereich der gesamten Länge der Schneidkante 12 erfolgt.

Figur 4 zeigt den Zustand, in welchem der Schneidvorgang abgeschlossen ist und ein zweiter Siegelvorgang beginnt, um eine Kopfnaht 10a am noch nicht gefüllten Beutel 10 zu schweißen. Hierbei wird durch den Kontakt zwischen dem Sonotroden-Segment 3a und dem Amboss-Segment 4a im Bereich des zweiten Siegelbereichs 23, 24 auch ein Transport des nacheilenden Beutels 10 in Förderrichtung A durchgeführt. Nachdem die Kopfnaht 10a gesiegelt wurde, kann ein Weitertransport durch die freien Umfangsbereich an der Sonotrode und dem Amboss zwischen den jeweils radial vorstehenden Sonotroden-Segmenten 3a und dem radial vorstehenden Amboss-Segmenten 4a ausgeführt werden. Wenn der Beutel 10 derart weitertransportiert wurde, befindet sich die Vorrichtung wieder in der in Figur 1 gezeigten Position und es wird damit begonnen, wieder eine Fußnaht zu siegeln.

Um eine gleich große Kopfnaht und Fußnaht zu erzielen, ist die Schneidkante 12 zum Spannelement 6 leicht versetzt. Erfindungsgemäß ist es dabei ein großer Vorteil, dass weder die Schneidkante 12 noch das Spannelement 6 in Kontakt mit dem jeweils anderen Bauteil kommt, so dass es zu keinem Verschleiß an der Schneideinrichtung 5 infolge eines Kontaktes von Schneidkanten mit einem anderen Bauteil kommt. Weiterhin bleiben dabei eine Auswechselbarkeit des Spannelements 6 bzw. eine Möglichkeit einer Verstellung durch die Verstelleinrichtung 7 beibehalten, so dass hierdurch Änderungen in der Größe der Fußnaht 9a bzw. der Kopfnaht 10a möglich sind. Somit kann erfindungsgemäß eine rotative Sonotrode und ein rotativer Amboss verwendet werden und der Packstoff kann kontinuierlich oder diskontinuierlich durch den Schneid- und Siegelbereich hindurchgeführt werden. Die Trennung des Packstoff-Schlauchs erfolgt dabei ohne mechanischen Kontakt zwischen Sonotrode und Amboss. Hierbei ist die Vorrichtung besonders kompakt und platzsparend aufgebaut und weist somit erhebliche Vorteile gegenüber dem Stand der Technik auf.

## Patentansprüche

1. Vorrichtung zum Schweißen und Trennen eines Packstoffs (8), umfassend:
- eine Ultraschall-Schweißvorrichtung (2) mit einer Sonotrode (3) mit wenigstens einem Sonotroden-Segment (3a) und einem Amboss (4) mit wenigstens einem Amboss-Segment (4a),
- wobei die Sonotrode (3) um eine erste Rotationsachse drehbar ist und wobei der Amboss (4) um eine zweite Rotationsachse drehbar ist, und
- eine Schneideinrichtung (5), wobei die Schneideinrichtung (5) in die Ultraschall-Schweißvorrichtung (2) integriert ist,
- wobei die Schneideinrichtung (5) ein Spannelement (6) umfasst, welches den zugeführten Packstoff (8) an einem Bereich spannt, und wobei die Schneideinrichtung (5) ferner eine Schneidkante (12) aufweist, welche derart angeordnet ist, dass sie mit dem durch das Spannelement (6) gespannten Bereich des Packstoffs (8) in Kontakt bringbar ist, um den Packstoff zu schneiden,
- wobei das Spannelement am Amboss (4) angeordnet ist, **dadurch gekennzeichnet, dass** die Schneidkante (12) an der Sonotrode (3) angeordnet ist.

2. Vorrichtung nach Anspruch 1, **dadurch gekennzeichnet, dass** die Sonotrode (3) eine Vielzahl von radial vorstehenden Sonotroden-Segmenten (3a) aufweist und der Amboss (4) eine Vielzahl von radial vorstehenden Amboss-Segmenten (4a) aufweist.

3. Vorrichtung nach einem der vorhergehenden Ansprüche, **dadurch gekennzeichnet, dass** das Spannelement eine senkrecht zu einer Förderrichtung (A) angeordnete Leiste ist.

4. Vorrichtung nach Anspruch 3, **dadurch gekennzeichnet, dass** das Spannelement (6) eine Verstelleinrichtung (7) umfasst, um das Spannelement (6) in Radialrichtung zu verstellen.

5. Vorrichtung nach Anspruch 3 oder 4, **dadurch gekennzeichnet, dass** am Spannelement (6) wenigstens eine vorstehende Zusatzschneide (16) angeordnet ist, um einen Zusatzschnitt, insbesondere eine Aufreißhilfe, im Packstoff (8) einzubringen.

6. Vorrichtung nach Anspruch 5, **dadurch gekennzeichnet, dass** das Spannelement (6) eine Vielzahl von Zusatzschneiden aufweist, welche derart angeordnet sind, um insbesondere ein Zick-Zack-Schneidenmuster zu Erzeugen.

7. Vorrichtung nach einem der vorhergehenden Ansprüche, **dadurch gekennzeichnet, dass** am Sonotroden-Segment (3a) eine Ausnehmung (11) ausgebildet ist, wobei die Ausnehmung (11) an einem Übergang zu einer Stirnseite des Sonotroden-Segments (3a) die Schneidkante (12) aufweist.

8. Vorrichtung nach einem der vorhergehenden Ansprüche, **dadurch gekennzeichnet, dass** an dem Sonotroden-Segment (3a) und an dem Amboss-Segment (4a) jeweils ein erster Siegelbereich (13, 23) und ein zweiter Siegelbereich (14, 24) ausgebildet ist und die Schneideinrichtung (5) zwischen dem ersten und zweiten Siegelbereich angeordnet ist.

9. Schlauchbeutelmaschine, umfassend eine Vorrichtung zum Schweißen und Trennen nach einem der vorhergehenden Ansprüche.

## Claims

1. Device for welding and separating a packaging material (8), comprising:
- an ultrasonic welding device (2) having a sonotrode (3) with at least one sonotrode segment (3a) and an anvil (4) with at least one anvil segment (4a),
- wherein the sonotrode (3) is rotatable about a first rotation axis and wherein the anvil (4) is rotatable about a second rotation axis, and
- a cutting unit (5), wherein the cutting unit (5) is integrated into the ultrasonic welding device (2),
- wherein the cutting unit (5) comprises a tensioning element (6) which tensions the fed packaging material (8) in a region, and wherein the cutting unit (5) further has a cutting edge (12) which is arranged such that it can be brought into contact with the region of the packaging material (8) which has been tensioned by the tensioning element (6), in order to cut the packaging material,
- wherein the tensioning element is arranged on the anvil (4),
**characterized in that** the cutting edge (12) is arranged on the sonotrode (3).

2. Device according to Claim 1, **characterized in that** the sonotrode (3) has a multiplicity of radially protruding sonotrode segments (3a), and the anvil (4) has a multiplicity of radially protruding anvil segments (4a).

3. Device according to one of the preceding claims, **characterized in that** the tensioning element is a rail which is arranged perpendicularly to a conveying direction (A).

4. Device according to Claim 3, **characterized in that** the tensioning element (6) comprises an adjustment unit (7) for adjusting the tensioning element (6) in a radial direction.

5. Device according to Claim 3 or 4, **characterized in that** at least one protruding additional blade (16) is arranged on the tensioning element (6) for inserting an additional cut, in particular a tear-open aid, into the packaging material (8).

6. Device according to Claim 5, **characterized in that** the tensioning element (6) has a multiplicity of additional blades which are arranged in a manner to produce, in particular, a zigzag blade pattern.

7. Device according to one of the preceding claims, **characterized in that** a recess (11) is formed on the sonotrode element (3a), wherein the recess (11) has the cutting edge (12) at a transition to one end side of the sonotrode element (3a).

8. Device according to one of the preceding claims, **characterized in that** on the sonotrode element (3a) and on the anvil element (4a) in each case a first sealing region (13, 23) and a second sealing region (14, 24) is formed, and the cutting unit (5) is arranged between the first and second sealing regions.

9. Tubular bag machine, comprising a device for welding and separating according to one of the preceding claims.

## Revendications

1. Dispositif de soudage et de séparation d'un matériau d'emballage (8), comprenant :
- un dispositif de soudage par ultrasons (2) comprenant une sonotrode (3) avec au moins un segment de sonotrode (3a) et une enclume (4) avec au moins un segment d'enclume (4a),
- la sonotrode (3) pouvant tourner autour d'un premier axe de rotation et l'enclume (4) pouvant tourner autour d'un deuxième axe de rotation, et
- un dispositif de coupe (5), le dispositif de coupe (5) étant intégré dans le dispositif de soudage par ultrasons (2),
- le dispositif de coupe (5) comprenant un élément de serrage (6) qui serre le matériau d'emballage acheminé (8) au niveau d'une région, et le dispositif de coupe (5) présentant en outre une arête de coupe (12) qui est disposée de telle sorte qu'elle puisse être amenée en contact avec la région du matériau d'emballage (8) serrée par l'élément de serrage (6) afin de découper le matériau d'emballage,
- l'élément de serrage étant disposé sur l'enclume (4),
**caractérisé en ce que** l'arête de coupe (12) est disposée sur la sonotrode (3).

2. Dispositif selon la revendication 1, **caractérisé en ce que** la sonotrode (3) présente une pluralité de segments de sonotrode (3a) faisant saillie radialement et l'enclume (4) présente une pluralité de segments d'enclume (4a) faisant saillie radialement.

3. Dispositif selon l'une quelconque des revendications précédentes, **caractérisé en ce que** l'élément de serrage est une baguette disposée perpendiculairement par rapport à une direction d'avance (A).

4. Dispositif selon la revendication 3, **caractérisé en ce que** l'élément de serrage (6) comprend un dispositif de réglage (7) afin de régler l'élément de serrage (6) dans la direction radiale.

5. Dispositif selon la revendication 3 ou 4, **caractérisé en ce que** sur l'élément de serrage (6) est disposé au moins un tranchant saillant supplémentaire (16), afin d'effectuer une découpe supplémentaire, en particulier un auxiliaire de déchirure, dans le matériau d'emballage (8).

6. Dispositif selon la revendication 5, **caractérisé en ce que** l'élément de serrage (6) présente une pluralité de tranchants supplémentaires, qui sont disposés de manière à produire notamment un motif de coupe en zigzag.

7. Dispositif selon l'une quelconque des revendications précédentes, **caractérisé en ce qu'**un évidement (11) est réalisé sur le segment de sonotrode (3a), l'évidement (11) présentant l'arête de coupe (12) au niveau d'une transition à une face frontale du segment de sonotrode (3a).

8. Dispositif selon l'une quelconque des revendications précédentes, **caractérisé en ce qu'**une première région de scellement (13, 23) et une deuxième région de scellement (14, 24) sont réalisées respectivement sur le segment de sonotrode (3a) et sur le segment d'enclume (4a), et le dispositif de coupe (5) est disposé entre la première et la deuxième région de scellement.

9. Machine de fabrication de sachets tubulaires, comprenant un dispositif de soudage et de séparation selon l'une quelconque des revendications précédentes.
